# EUROPÄISCHE PATENTANMELDUNG

(11) **EP 0 651 272 A2**
(43) Veröffentlichungstag der Anmeldung: **03.05.1995**
(21) Anmeldenummer: 94810576.2
(22) Anmeldetag: 04.10.1994
(51) Int. Cl.: G02B 23/24, G02B 15/12

(54) **Zoomoptik für Endoskop ähnliche Geräte**

(30) Priorität: 29.10.1993 CH 260/93
(71) Anmelder: Dr. CANZEK ENDOSKOPIE AG, CH-5035 Unterentfelden (CH)
(72) Erfinder: Canzek, Ludvik, Dr., CH-5035 Unterentfelden (CH)

(57) **Zusammenfassung**

Es werden Zoomoptiken für Endoskop ähnliche Geräte beschrieben, welche an das proximale Ende des Gerätes zu befestigen sind. Die Bedienung der Zoomoptik ist sehr einfach: zuerst wird das Bild mit dem Fokussierglied scharf gestellt, dann kann der ganze Vergrösserungsbereich ohne Nachfokussieren benutzt werden. Die Einfachheit der Bedienung erlaubt eine breite Anwendung von mit derartigen Zoomoptiken ausgerüsteten Geräten insbesondere in der Medizin. Der Anwender wird durch sehr einfache Bildeinstellung von seiner ärztlichen Tätigkeit kaum noch abgelenkt.

## Beschreibung

Die Erfindung betrifft eine Zoomoptik für Endoskop ähnliche Geräte.

Optische Systeme dieser Art sind bekannt. In der DE os 2640353 wird das Zoomen durch Bewegungen eines Objektiv- und eines okularteils erreicht, wobei mit dem Objektivteil auch alle nachfolgenden Bildübertragungssysteme bewegt werden. Dies geschieht so, dass alle beweglichen Teile in einem separaten Optikrohr gefasst sind und dieses innerhalb eines Hüllrohrs bewegt wird. Das zusätzliche Optikrohr bewirkt, dass bei einem gegebenen Aussendurchmesser die Linsendurchmesser verkleinert werden müssen, was die Lichtstärke des Gerätes, dadurch die Auflösungsgrenze und den Bildkontrast vermindert. Auch ist eine Bewegung von langen Rohren innerhalb eines Hüllrohrs teuer und störanfällig, denn die Rohre sind dünnwandig.

In DE 3047605 A1 ist eine afokale Zoomoptik angegeben, welche auf das okular eines Endoskopes montiert wird und mit der man die Vergrösserung verändert. Fokussiert wird aber mit dem Objektiv. solche Fokussierart ist kompliziert und teuer, weil sie am Ort des engsten Endoskopdurchmessers geschieht und dieser Ort weit vom proximalen Geräteende entfernt ist, wo die zweite Bewegung stattfindet.

Schliesslich sind auf dem Markt Zoomoptiken zu finden, welche an das Okular angeschlossen werden. Hier ist aber bei jeder Vergrösserungsänderung eine Nachfokussierung nötig. Das ist so sehr nachteilig, dass solche Geräte wenig Anwendung finden, insbesondere in der Medizin. Ein solches Endoskop verlangt z.B. von einem operierenden Arzt, jeweils zwei Bewegungen auszuführen um ein scharfes Bild bei einer bestimmten Vergrösserung zu erhalten. Das ist zeitraubend und von der Arbeit ablenkend.

Ausgehend vom beschriebenen Stand der Technik liegt der Erfindung die Aufgabe zugrunde, eine Zoomoptik zu konstruieren, mit der man bei einem Endoskop ähnlichen Gerät das Fokussieren und die Vergrösserungsänderung allein in diesem optischen System ausführen kann und wobei ein einmal scharf gestelltes Bild bei jeder Vergrösserungsänderung scharf bleibt, d.h. das Nachfokussieren fällt weg.

Die Aufgabe der Erfindung wird bei einer Zoomoptik durch die Merkmale des kennzeichnenden Teils des Patentanspruchs 1 gelöst. Bevorzugte Ausführungsbeispiele sind in den Ansprüchen 2 bis 10 angegeben.

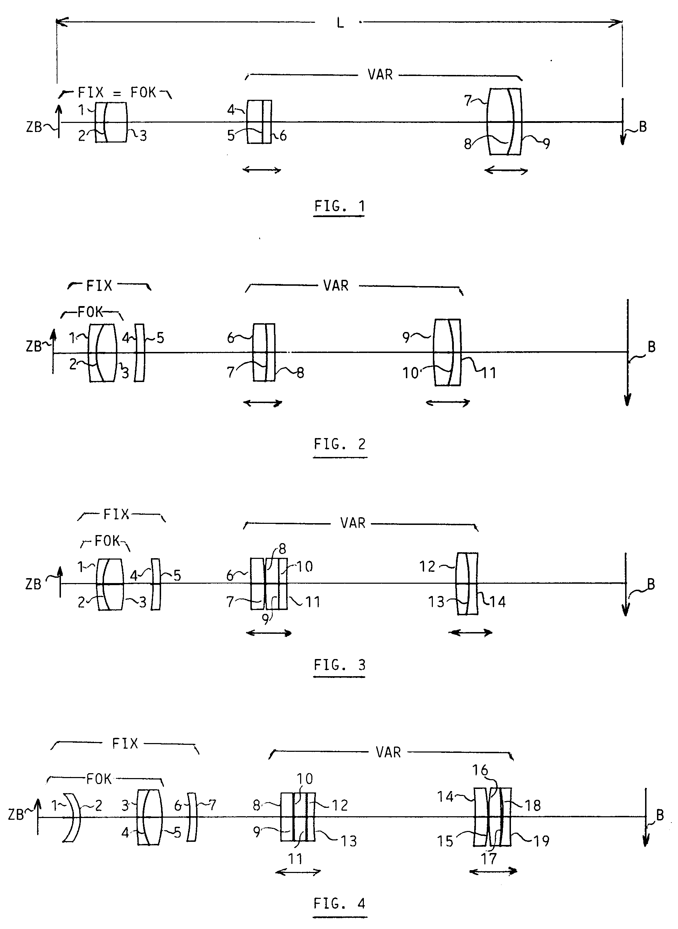

Die Erfindung wird mit schematischen zeichnungen in den Fig.1 bis 6 erklärt.

Fig.1 zeigt ein erfindungsgemässes Beispiel von einfacher Ausführung mit nur 6 Linsen, das den Daten des Patentanspruchs 5 entspricht. Die Linsengruppe FIX besteht aus einer Kittlinse, die gleichzeitig Fokussierlinse FOK ist. Vor ihr in einem festen Abstand befindet sich das Zwischenbild ZB, welches durch eine vorstehende Endoskop ähnliche Optik entsteht. Die Linsengruppe VAR besteht aus nur zwei Kittlinsen, welche längs der optischen Achse bewegt werden, um die gewünschte Vergrösserungsänderung zu bewirken. Durch Fokussieren auf verschiedene Objektweiten vor dem Geräteobjektiv verändern sich die Lage des Zwischenbildes ZB und die Länge L. Das wird mit einer Bewegung des Gliedes FOK kompensiert, so dass das letzte Bild immer am gleichen Ort B entsteht.

Fig.2 und 3 zeigen ein erfindungsgemässes Beispiel mit 7 bzw. 8 Linsen, die den Daten des Patentanspruchs 6 bzw. 7 entsprechen. Ein wesentlicher Unterschied zu Fig.1 liegt darin, dass die Linsengruppe FIX aus einer Kittlinse und einer weiteren Linse besteht und dass nur die Kittlinse als Fokussierlinse FOK dient.

Fig. 4 zeigt ein erfindungsgemässes Beispiel mit 10 Linsen, die den Daten des Patentanspruchs 8 entspricht. Hier ist das Glied FOK dreilinsig und die einzelnen Glieder der Linsengruppe VAR sind je aus drei Einzellinsen aufgebaut. Ähnlich ist auch die Zoomoptik nach dem Patentanspruch 9 aufgebaut.

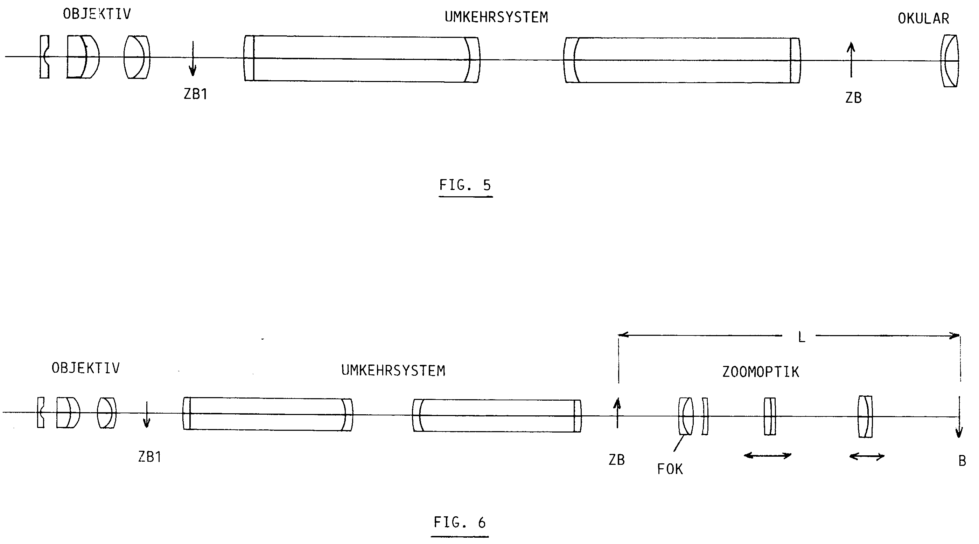

In Fig. 5 ist ein Endoskop ähnliches Gerät dargestellt. Es besteht aus einem Objektiv, welches den nicht gezeichneten Gegenstand in ZB1 abbildet. ZB1 wird auch das (erste) Zwischenbild genannt. Dem Objektiv folgen ein, wie in Fig. 5 und 6 dargestellt, oder mehrere Umkehrsysteme, auch Bildübertragungssysteme genannt, welche dann ZB1 in ZB abbilden. Für visuelle Anwendung wird am Ende ein Okular eingesetzt, mit welchem das zwischenbild ZB betrachtet wird. Das Okular kann fokussierbar montiert werden, womit die Augenakkommodation und das Fokussieren ermöglicht werden.

In Fig. 6 wird das Okular durch eine zoomoptik nach Fig. 2 ersetzt, für welche das Zwischenbild ZB als Gegenstand ist. Die Zoomoptik bildet ihn ins Bild B ab. In Endoskopen mit nicht fokussierbarem Objektiv ist die Lage des ZB1 vom Objektabstand abhängig. In diesem Fall ändert sich auch die Lage des letzten zwischenbildes. Dies wird hier so kompensiert, dass das Glied FOK durch seine Verschiebung (Fokussierung) den Gegenstand ZB bei jeder Lage des ZB an den gleichen Ort abbildet (in der Fig. 6 nicht gezeichnet), der vom Bildort B einen festen Abstand hat. Durch diese Massnahme bleibt die Bildschärfe beim zoomen erhalten.

Für eine bessere Verständigung der Erfindung wird ein vollständiges Ausführungsbeispiel der Optik eines Endoskop ähnlichen Gerätes nach Fig. 6 mit der Zoomoptik nach Anspruch 6 in der nachfolgenden Tabelle angegeben. Hier befindet sich der Gegenstand 30 mm vor der ersten objektivfläche. Das Glied FOK ist so positioniert, dass das Zwischenbild ZB durch FOK ins Unendliche abgebildet wird (die nachfolgenden Linsen bilden es in B ab). Die variablen Luftabstände für zwei Zoompositionen entsprechen den paraxialen Vergrösserungen -0.117 und -0.071.

Tabelle des Endoskop ähnlichen Gerätes mit Zoomoptik gemäss Fig. 6:

| | Radius | Abstand | Brechzahl/Abbezahl |
|---|---|---|---|
| Objekt | | 30.0 | |
| Objektiv | plan | 0.43 | 1.788/47.5 |
| | 1.074 | 2.45 | |
| | plan | 1.97 | 1.788/47.5 |
| | -4.073 | 1.35 | 1.521/69.7 |
| | -3.006 | 2.53 | |
| | 5.091 | 2.15 | 1.521/69.7 |
| | -2.527 | 0.61 | 1.805/25.4 |
| | -6.220 | 4.5 | |
| Zwischenbild ZB1 | | 5.25 | |
| Umkehrsystem | 13.857 | 1.08 | 1.651/55.9 |
| | plan | 22.49 | 1.517/64.2 |
| | -4.895 | 1.08 | 1.648/33.8 |
| | -9.511 | 8.7 | |
| | 9.511 | 1.08 | 1.648/33.8 |
| | 4.895 | 22.49 | 1.517/64.2 |
| | plan | 1.08 | 1.651/55.9 |
| | -13.857 | 5.25 | |
| Zwischenbild ZB | | 8.794 | |
| Zoomoptik | 16.260 | 0.6 | 1.805/25.4 |
| | 4.396 | 1.56 | 1.744/44.8 |
| | -10.356 | 1.5 | (abhängig von der Fokussierung) |
| | -13.800 | 0.6 | 1.517/69.6 |
| | -23.910 | variabel | 2.39 bis 16.45 |
| | 29.159 | 1.08 | 1.755/52.3 |
| | -19.926 | 0.6 | 1.805/25.4 |
| | -58.200 | variabel | 18.73 bis 2.36 |
| | 18.720 | 1.5 | 1.652/44.9 |
| | -8.520 | 0.6 | 1.805/25.4 |
| | -33.264 | variabel | 11.53 bis 13.85 |

In die Zoomoptiken nach Patentansprüchen 1 bis 10 kann man auch weitere, in den Abbildungen nicht gezeigte und in den Patentansprüchen nicht angegebene feste, d.h. nicht bewegliche Linsensysteme vor, zwischen und/oder nach den beiden beweglichen Teilen der Linsengruppe VAR einbauen. Systeme solcher Art sind für sich nicht von erfinderischer Natur, sie bleiben im Rahmen dieser Erfindung.

An die Zoomoptiken nach Patentansprüchen 1 bis 10kann man ein nicht in den Abbildungen gezeigtes und nicht in den Patentansprüchen angegebenes Linsensystem anschliessen, welches das Bild B so abbildet, dass es visuell wahrnehmbar ist. Dieses System, oder nur ein Teil davon, kann auch für die Dioptrieeinstellung benutzt werden. Systeme solcher Art sind für sich nicht von erfinderischer Natur, sie bleiben im Rahmen dieser Erfindung.

Optische Berechnungen zeigen, dass Zoomoptiken nach dieser Erfindung so gut auskorrigierbar sind, dass mit einer grösseren Vergrösserung auch eine höhere Auflösung erreichbar ist. Sie zeigen auch, dass nach dem Fokussieren mit dem speziell dafür vorgesehenen Glied FOK die Bildschärfe im ganzen vergrösserungsbereich ohne Nachfokussierung gewährleistet ist. Die Fokussierung und die Vergrösserungsänderung sind somit streng unabhängig. Das Zwischenbild nach dem Fokussieren mit dem Glied FOK entsteht in den Ausführungsbeispielen in sehr grosser, bzw. unendlicher Entfernung vom Bildort B. Der Abstand zwischen FOK und der nachfolgenden Linse muss bei einer Fokussierung vom tabellierten Wert geändert werden, wodurch auch der Abstand L grösser wird. Übersteigt dieser Wert 180, werden die nachfolgenden Linsen in Durchmesser gross und dadurch teuer, die Zoomoptik lang und dadurch unhandlich.

Die in den Patentansprüchen 5 bis 9 genannten Bezeichnungen L und F(FOK) haben folgende Werte:

| Anspruch Nr. | L | F(FOK) |
|---|---|---|
| 5 | 110.1 | 24.0 |
| 6 | 49.5 | 9.6 |
| 7 | 89.3 | 18.5 |
| 8 | 90.3 | 19.2 |
| 9 | 129.5 | 26.2 |

Die Ausführung der Fokussierung und Zoombewegungen in der erfingsungsgemässen Zoomoptik kann mechanisch einfach und preislich günstig erfolgen. Die Einführung von einfach bedienbaren Zoomoptiken nach dieser Erfindung z. B. in die Endoskopie, kann eine Erweiterung der Endoskopanwendung auslösen, insbesondere in der Medizin. Dort könnte diese Technik besonders dann vermehrt zur Anwendung kommen, wenn eine Annäherung des Endoskopes an den Gegenstand nicht oder nicht genügend möglich ist, um damit eine Bildvergrösserung zu erreichen.

## Patentansprüche

1. Zoomoptik für Endoskop ähnliche Geräte, dadurch gekennzeichnet, dass sie am proximalen Ende des Gerätes angeordnet ist, dass sie aus einer Linsengruppe FIX und einer Linsengruppe VAR besteht, dass die Linsengruppe FIX mindestens zwei Linsen hat, wobei mindestens eine sammelnd ist, dass in dieser Linsengruppe mindestens ein Glied FOK zum Fokussieren des Gerätes verwendet wird, dass die Linsengruppe VAR mindestens zwei längs der optischen Achse bewegliche Glieder beinhaltet, wobei jedes der beweglichen Glieder aus mindestens einer Sammellinse und mindestens einer Zerstreuungslinse aufgebaut ist und dass ein durch das Glied FOK erzeugtes Bild des Zwischenbildes (ZB) immer im gleichen oder annähernd gleichen Abstand vom Bildort B der Zoomoptik entsteht.

2. Zoomoptik nach Patentanspruch 1, dadurch gekennzeichnet, dass die Brennweite F(FOK) des Fokussiergliedes FOK der Beziehung 7 < F(FOK) < 28 entspricht.

3. Zoomoptik nach Patentanspruch 1, dadurch gekennzeichnet, dass der Abstand L zwischen dem Zwischenbild ZB des Endoskop ähnlichen Gerätes und dem Bildort B der Beziehung L < 180 entspricht.

4. Zoomoptik nach Patentanspruch 1, dadurch gekennzeichnet, dass die Linsengruppe VAR ein feststehendes Linsensystem beinhaltet, welches das Bild B so abbildet, dass ein visuelles Betrachten ermöglicht ist und dass dieses Linsensystem für Dioptrieeinstellung benutzt werden kann.

5. Zoomoptik nach einem der Patentansprüche 1 bis 4, gekennzeichnet durch folgende Daten:
| Nummer | Radius | Abstand | Brechzahl | Abbe-Zahl |
|---|---|---|---|---|
| 1 | 40.869 | 1.5 | 1.805 | 25.4 |
| 2 | 11.016 | 3.9 | 1.744 | 44.8 |
| 3 | -25.792 | 9.05 / 44.00 | | |
| 4 | 33.000 | 2.7 | 1.755 | 52.3 |
| 5 | 3729.900 | 1.35 | 1.805 | 25.4 |
| 6 | 75.756 | 53.29 / 5.80 | | |
| Nummer | Radius | Abstand | Brechzahl | Abbe-Zahl |
|---|---|---|---|---|
| 7 | 26.685 | 4.5 | 1.606 | 43.7 |
| 8 | -15.507 | 1.35 | 1.805 | 25.4 |
| 9 | -58.359 | 10.52 / 23.06 | | |
mit F(FOK) = 24.0 und L < 180.

6. Zoomoptik nach einem der Patentansprüche 1 bis 4, gekennzeichnet durch folgende Daten:
| Nummer | Radius | Abstand | Brechzahl | Abbe-Zahl |
|---|---|---|---|---|
| 1 | 16.260 | 0.6 | 1.805 | 25.4 |
| 2 | 4.396 | 1.56 | 1.744 | 44.8 |
| 3 | -10.356 | 1.5 | | |
| 4 | -13.800 | 0.6 | 1.517 | 69.6 |
| 5 | -23.910 | 2.39 / 16.45 | | |
| 6 | 29.159 | 1.08 | 1.755 | 52.3 |
| 7 | -19.926 | 0.6 | 1.805 | 25.4 |
| 8 | -58.200 | 18.73 / 2.36 | | |
| 9 | 18.720 | 1.5 | 1.652 | 44.9 |
| 10 | -8.520 | 0.6 | 1.805 | 25.4 |
| 11 | -33.264 | 11.53 / 13.85 | | |
mit F(FOK) = 9.6 und L < 180.

7. Zoomoptik nach einem der Patentansprüche 1 bis 4, gekennzeichnet durch folgende Daten:
| Nummer | Radius | Abstand | Brechzahl | Abbe-Zahl |
|---|---|---|---|---|
| 1 | 16.552 | 0.9 | 1.785 | 26.1 |
| 2 | 7.288 | 2.8 | 1.624 | 47.0 |
| 3 | -20.617 | 4.0 | | |
| 4 | -21.268 | 1.0 | 1.487 | 70.4 |
| 5 | -37.770 | 2.68 / 28.72 | | |
| 6 | -411.590 | 1.8 | 1.786 | 50.0 |
| 7 | -35.420 | 0.1 | | |
| 8 | 37.805 | 1.8 | 1.786 | 50.0 |
| 9 | 350.745 | 0.1 | | |
| 10 | -146.497 | 1.0 | 1.648 | 33.8 |
| 11 | 56.475 | 36.12 / 2.01 | | |
| Nummer | Radius | Abstand | Brechzahl | Abbe-Zahl |
|---|---|---|---|---|
| 12 | 27.704 | 1.8 | 1.786 | 50.0 |
| 13 | -21.183 | 1.0 | 1.717 | 29.5 |
| 14 | 49.837 | 16.75 / 24.82 | | |
mit F(FOK) = 18.5 und L < 180.

8. Zoomoptik nach einem der Patentansprüche 1 bis 4, gekennzeichnet durch folgende Daten:
| Nummer | Radius | Abstand | Brechzahl | Abbe-Zahl |
|---|---|---|---|---|
| 1 | -4.847 | 1.0 | 1.517 | 64.2 |
| 2 | -6.054 | 8.2 | | |
| 3 | 33.266 | 0.9 | 1.785 | 26.1 |
| 4 | 8.876 | 2.8 | 1.658 | 50.9 |
| 5 | -14.051 | 4.0 | | |
| 6 | -15.584 | 1.0 | 1.487 | 70.4 |
| 7 | -22.608 | 2.44 / 28.82 | | |
| 8 | 90.978 | 1.8 | 1.786 | 50.0 |
| 9 | -94.768 | 0.1 | | |
| 10 | 55.792 | 1.8 | 1.786 | 50.0 |
| 11 | -97.554 | 0.1 | | |
| 12 | 127.475 | 1.0 | 1.699 | 30.1 |
| 13 | 31.500 | 36.56 / 2.12 | | |
| 14 | -40.760 | 1.8 | 1.620 | 63.5 |
| 15 | -24.836 | 0.1 | | |
| 16 | 25.730 | 1.8 | 1.786 | 50.0 |
| 17 | -37.672 | 0.3 | | |
| 18 | -20.687 | 1.0 | 1.699 | 30.1 |
| 19 | 65.300 | 16.11 / 24.16 | | |
mit F(FOK) = 19.2 und L < 180.

9. Zoomoptik nach einem der Patentansprüche 1 bis 4, gekennzeichnet durch folgende Daten:
| Nummer | Radius | Abstand | Brechzahl | Abbe-Zahl |
|---|---|---|---|---|
| 1 | -14.266 | 1.2 | 1.785 | 26.1 |
| 2 | -84.297 | 3.0 | 1.697 | 55.4 |
| 3 | -13.149 | 0.1 | | |
| Nummer | Radius | Abstand | Brechzahl | Abbe-Zahl |
|---|---|---|---|---|
| 4 | 60.759 | 2.7 | 1.786 | 50.0 |
| 5 | -49.672 | 10.1 | | |
| 6 | -17.739 | 1.4 | 1.501 | 56.4 |
| 7 | -23.729 | 3.83 / 39.88 | | |
| 8 | 366.429 | 2.5 | 1.786 | 50.0 |
| 9 | -77.711 | 0.2 | | |
| 10 | 97.280 | 2.5 | 1.786 | 50.0 |
| 11 | -90.436 | 0.1 | | |
| 12 | 221.193 | 1.4 | 1.699 | 30.1 |
| 13 | 43.436 | 50.61 / 3.52 | | |
| 14 | -24.550 | 2.5 | 1.620 | 63.5 |
| 15 | -20.574 | 0.1 | | |
| 16 | 31.280 | 2.9 | 1.786 | 50.0 |
| 17 | -51.776 | 0.5 | | |
| 18 | -26.935 | 1.4 | 1.699 | 30.1 |
| 19 | 84.297 | 22.09 / 33.13 | | |
mit F(FOK) = 26.2 und L < 180.

10. Zoomoptik nach Patentanspruch 1, dadurch gekennzeichnet, dass die Zoomoptik am proximalen Ende eines Endoskop ähnlichen Gerätes ohne okular angebracht ist.
